# EUROPEAN PATENT APPLICATION

(11) **EP 2 124 207 A1**
(43) Date of publication of application: **25.11.2009**
(21) Application number: 09251354.8
(22) Date of filing: 20.05.2009
(51) Int. Cl.: G08B 29/06, G08B 29/16, G08B 25/08, H04M 11/04

(54) **An alarm network**

(30) Priority: 20.05.2008 EP 08156597; 04.12.2008 GB 0822173
(71) Applicant: CSL (Dualcom) Limited, Harefield, Middlesex UB9 6NZ (GB)
(72) Inventor: Chandorkar, Santosh, Hillingdon UB10 9DY (GB); Hollett, Phil, Bucks HP27 0JW (GB)
(74) Representative: Howson, Richard G.B.

(57) **Abstract**

An alarm network wherein an alarm receiving device is arranged to establish a first radio link, a second radio link and a wired link with a remote alarm unit so as to communicate therewith, and wherein the receiving device is further arranged to attempt to communicate with the alarm device over the second radio link should no signalling be received on the first radio link within a predetermined period, thereby to verify correct operation of the alarm device.

## Description

### TECHNICAL FIELD

This invention relates to an alarm network, including alarm devices such as intruder alarm units or fire alarm units, to alarm processing means that forms part of such a network and to methods of operating the same.

### BACKROUND

Intruder alarms that are arranged to detect the presence of an intruder and to provide an alert indicative thereof are often found in domestic, commercial and other premises.

Some intruder alarms are connected to form part of an alarm network over which the alarm can communicate with a remote alarm receiving centre (ARC). Upon an alarm condition being met, such as the detection of the presence of an intruder, an alarm of this type issues an alarm signal indicative of this and transmits it to the ARC over the network. Thus, the alarm is "raised". The ARC then takes appropriate action, which might include informing a predetermined person with responsibility for the premises, such as the owner, that an alarm signal has been received or similarly informing the police. The owner or, as the case may be, the police may then investigate further.

The connection of an intruder alarm to form part of an alarm network in this way is advantageous in that the ARC acts on the alarm signal to inform the predetermined person or the police. Thus, there is no need for an owner of alarmed premises to rely on a neighbour or passer-by taking notice that an alarm has been raised and then acting responsibly in response thereto. For this reason, some intruder alarms that are connected to a network do not sound an alarm local to the alarmed premises, and instead rely on the alarm being raised at the ARC and passed on as described above. This has the advantage that an intruder would not be disturbed by the raising of the alarm so may be apprehended at the premises.

One drawback however is that, should the network or the alarm's connection thereto become inoperable, the alarm signal issued by the alarm would not be passed on to the ARC. In such circumstances, the alarm may not be raised.

Existing fire alarms, which may also communicate with an ARC over an alarm network, suffer from similar drawbacks.

A problem with existing alarm networks is that it is possible that an alarm device could fail at any time for a number of reasons, such as, for example, the power supply being deliberately removed from the alarm device by a would-be intruder, a wired connection from the alarm device to the network being deliberately cut, or simply due to a malfunction. Some existing alarm devices have the capability to send a periodic confirmation to another part of the alarm network, such at the ARC, to indicate that the alarm device is operating correctly and is properly connected to the network. If the messages confirming that the alarm device is operational, known as "polling" messages, are not received by the alarm network, then the alarm may be raised. This is intentional, since the lack of reception of polling messages could indicate that the alarm device is malfunctioning. However, a further problem exists in that sometimes the failure by the network to receive polling messages is due to a failure elsewhere in the network, not in the alarm device. In these cases, a false alarm may be raised at the ARC. Such a false alarm can be expensive or inconvenient to deal with since it may involve unnecessary action by the person with responsibility for the alarmed premises, or the police being alerted unnecessarily. Therefore, a reliable method of handling polling messages is desirable.

Existing alarm networks also suffer from a problem in that it can be difficult for an alarm network operator to know whether an alarm device at a particular site being monitored is experiencing problems with its connection(s) to the ARC, unless an operator of alarm network performs extensive checks or sends a service engineer to visit the site being monitored. It would be advantageous to be able to ascertain more easily the state of connections from the alarm device to the ARC are.

Also, previous alarm networks suffered from a problem in that once an alarm device was programmed and installed, it was problematic for the person with responsibility for the alarmed premises to upgrade or downgrade the level of protection afforded by the device (it will be understood by those skilled in this area that this is sometimes referred to as the "grade" of the alarm device). More secure grades of service require more frequent polling messages to be sent from the alarm device to the alarm network so as to allow the alarm network to check that the alarm device is operating correctly and is connected to the alarm network. This would require a service engineer to visit the premises and replace or reprogram the alarm device, which is a costly and inconvenient operation. Furthermore, should the alarm device require upgrading with updated internal software (for example if an error was discovered in the internal software which required correction), each alarm device would need to be replaced or upgraded by a service engineer. This could be extremely costly and inconvenient.

Furthermore, existing alarm networks can suffer from an inability to identify a particular alarm device in the alarm network as being unique and distinct from all other alarm devices in the alarm network. This results in the problem that alarm messages cannot be validated with respect to their having originated from a valid source (such as an alarm device operated by a particular provider of alarm service and associated with a fully paid up subscription to the alarm service) as opposed to a rogue device (such as an alarm device not associated with a paid up subscription, or a device operated by a potential intruder trying to gain access the alarm network in order to reduce its effectiveness) connected to the alarm network. This can result in false alarms, missed alarms or effort wasted in reacting to alarm signals from rogue devices.

It is an object of this invention to at least address one or more of these drawbacks.

### SUMMARY

In a first aspect of the invention there is provided a method of operating alarm processing means that forms part of an alarm network, the network comprising a first radio link, a second radio link and a wired link between the alarm processing means and an alarm device remote from the alarm processing means so as to allow communication therebetween, the method further the comprising the steps of the alarm processing means:
a) monitoring for reception of a signal from the alarm device on at least one of the first radio link and the second radio link;
b) if no signal from the alarm device is received on the first radio link during a predetermined time period, transmitting a query signal on the second radio link to the alarm device requesting that the alarm device respond thereto;
c) monitoring for reception of a response from the alarm device to the query signal; and
d) if no signal from the alarm device and no response to the query signal is received within another predetermined time period, sending an error signal to a remote part of the network.

The alarm device may be, for example, one of a fire alarm unit, an intruder alarm unit and a personal alarm unit.

The first radio link may be a GPRS radio link and the second radio link may be a GSM radio link.

In the method above, the signal monitored for reception from the alarm device may be a polling signal indicative that the alarm device is operating correctly and/or an alarm signal indicative of an alarm condition having been met and/or a link fail signal indicative that one of the wired link and the radio links is inoperable.

The method above may include the step of the alarm signal being received on any of the first radio link, the second radio link and the wired link.

The method above may include the step of the polling signal being received on the first radio link and/or on the wired link.

The query signal may be transmitted to the alarm device over the second radio link, and the response may be received over the second radio link and/or the wired link.

In the method above, upon reception of an alarm signal, a further signal may be sent by the alarm processing means to a remote part of the network, which may be an alarm receiving centre, the further signal indicating that an alarm condition has been met.

Optionally, an interface device may be interposed between the alarm device and the network.

In step (d), the error signal may be sent to one or more alarm receiving centre. Step (d) may include or may be followed by the step of the alarm processing means signalling via SMS messaging, over a mobile telephone network such as GPRS and/or GSM, to a responsible person that an error has occurred.

In the method above, the step of monitoring for reception of a signal from the alarm device may be followed by the step of the alarm processing means validating the signal and not acting on the signal in the event of the signal being determined to be invalid. The validating step may include comparing an identifier code contained within the signal received from the alarm device with information contained in a database accessible by the alarm processing means. The identifier code may uniquely identify the alarm device. The identifier code may be associated in a database with at least one of the postal address of premises at which the alarm device is installed, the physical location of the alarm device and a PSTN telephone number of the alarm device.

The network may comprise more than one alarm processing means as defined hereinabove.

The wired link may incorporate network relay means for relaying information between the alarm processing means and the alarm device via the wired link, which may be a PSTN. The network relay means may be arranged for data communication with the alarm unit via the PSTN using a modem or internet protocol. The PSTN telephone number of the network relay means may, in a database, be associated with characteristics such that the wired link is suitable for frequent communication thereover. The PSTN telephone number of the network relay means may be a toll-free telephone number. The network relay means may be a network node.

In a second aspect of the invention there is provided a method of operating alarm processing means for use in an alarm network, comprising the steps of establishing a communications link between and the alarm processing means and an alarm device which is remote from the alarm processing means, and the alarm processing means periodically sending information about the alarm device to a remote server accessible by an operator of the alarm network, such that the remote server can store and process the information.

The information about the alarm device may include log data and status information received from the alarm device.

The information about the alarm device may include records of failed communication attempts between the alarm device and the alarm processing means.

In a third aspect of the invention there is provided a method of operating alarm processing means for use in an alarm network, comprising the steps of establishing a radio link between the alarm processing means and an alarm device which is remote from the alarm processing means, so as to allow data communication therebetween, and the alarm processing means selectively transferring to the alarm device information for controlling operation of the alarm device.

The information for controlling operation of the alarm device may include configuration data and/or software for executing on processing means of the alarm device.

The radio link may be a GSM and/or a GPRS radio link.

The method may further comprise receiving at the alarm processing means the information for controlling operation of the alarm device from a remote server accessible by an operator of the network and remote from the alarm processing means, before the step of sending the information to the alarm device.

In the method above, the configuration data may comprise at least one of:
i) an identifier code which uniquely identifies the alarm device;
ii) an alarm receiving centre address which uniquely identifies an alarm receiving centre designated for receiving alarm messages from the alarm device;
iii) a polling server address which uniquely identifies a polling server designated for receiving polling messages from the alarm device.
iii) a security grade number; and
iv) a software component for execution on a microprocessor of the alarm device.

In a fourth aspect of the invention there is provided a method of operating alarm processing means for use in an alarm network, comprising the steps of establishing at least one of a first radio link, a second radio link and a wired link between the alarm processing means and an alarm device which is remote from the alarm processing means so as to allow communication therebetween, the method further comprising the steps of the alarm processing means:
i) monitoring for reception of a signal from the alarm device on one of the first radio link, the second radio link and the wired link; and
iii) if no signal is received from the alarm device during a predetermined time period, then selectively signalling an error signal via SMS messaging, over a mobile telephone network such as GPRS and/or GSM, to a user.

In a fifth aspect of the invention there is provided a method of operating network relay means for relaying signals in an alarm network, comprising the steps of arranging the network relay means to allow communication with an alarm device which is remote from the network relay means and connected to the network relay means via a PSTN, arranging the network relay means for connection to an alarm processing means, and forwarding signals received from the PSTN to the alarm processing means.

In a sixth aspect of the invention there is provided a method of operating an operator accessible server for use in an alarm network, comprising the steps of arranging the server to have storage and processing means, arranging the server to be remotely accessible via a communications connection, receiving a signal from a remote device over the communications connection, separating an access code field from the signal, validating the signal by comparing the access code field with a predetermined code word and rejecting the signal if found to be invalid, and if found to be valid processing the signal to allow updating and selection of content in a database stored in the storage means, the database containing fields including a unique alarm device identifier code which uniquely identifies an alarm device.

The database may further contain fields including a field indicating the postal address of an alarm device, the security grade level of the alarm device and the status of an alarm device subscriber associated with an alarm device.

The step of receiving a signal from a remote device may comprise receiving a signal from an alarm processing means and/or from a remote operator terminal.

The alarm processing means may be a polling server for coordinating signals sent between alarm devices and alarm receiving centres in an alarm network.

The relay device may be an alarm gateway for receiving signals from a PSTN and relaying them to alarm processing means in an alarm network.

In a seventh aspect of the invention there is provided a method of operating a communications device for use in an alarm network, the device arranged to establish an internet link with a part of the network remote from the device so as to communicate therewith, the method comprising the steps of the device periodically sending a message to the remote network part indicative that the device is operational, the period being a predetermined period.

In an eighth aspect of the invention there is provided a method of operating alarm processing means for use in an alarm network, comprising the steps of establishing a communications link between the alarm processing means and a device which is remote from the alarm processing means so as to allow communication therebetween, the method further comprising steps of the alarm processing means:
i) monitoring for reception of a signal from the alarm device, the signal containing data and an alarm device ID code which uniquely identifies the alarm device in the network;
ii) based on the ID code, selecting contents of a database;
iii) from the selected database contents determining if the device is permitted to use the alarm network; and
iv) if the device is not permitted to use the alarm network then discarding the signal before acting further on the signal.

In further aspects of the invention there are provided devices which implement the methods of the first to eighth aspects of the invention described above.

In a yet further aspect of the invention there is provided a software program including code portions executable by processing means of a device for operation in an alarm network so as to cause that device to carry out a method as defined in any of the above aspects.

In a yet still further aspect of the invention there is provided a record carrier carrying thereon or therein a record of the computer program above. The record carrier may be physical storage means, such as solid state, magnetic or optical storage means. The solid state storage means may include, for example, flash memory, ROM, EPROM or EEPROM. The optical storage means may include an optical storage disk such as, for example, a CD-ROM or DVD-ROM. The record carrier may also be a signal such as, for example, a radio or electrical signal.

For each aspect, the device may be arranged so as to carry out the method.

Whilst currently preferred, it is not essential that the attempted communication in the first operation be over a radio link. Similarly, whilst currently preferred, it is not essential that the attempted communication in the second operation be over a radio link. Either or both of these may be over the or another wired link. The attempted communication in the third operation may be over a radio link.

The essential and optional features of each aspect may also be features of each other aspect.

### BRIEF DESCRIPTION OF THE DRAWINGS

Specific embodiments of the invention are now described below by way of example only and with reference to the accompanying drawings, in which:
Figure 1 is a schematic diagram of a communications device for use in an alarm device;
Figure 2 is a schematic diagram of an alarm network of which the alarm device and hence the communications device is part;
Figure 3 is another schematic diagram of the alarm network showing further detail omitted from Figure 2 for clarity;
Figure 4 is a flow diagram showing a standby mode of operation of the communications device; and
Figure 5 is a flow diagram showing a call routine performed in an alarm mode of operation and in a link failure mode of operation of the communications device.
Figure 6 is a diagram of an alarm network, showing both GPRS and GSM radio connection paths and additionally a wired internet link from the alarm device to the polling servers, which embody the invention.
Figure 7 is a flow diagram showing the operation of the polling servers, so as to filter and validate messages from an alarm device.
Figure 8 is a flow diagram showing actions taken by the polling servers in response to reception of an alarm message.
Figure 9 is a flow diagram showing actions taken by the polling servers in response to reception of a path failure message.
Figure 10 is a flow diagram showing actions taken by the polling servers in response to reception or non-reception of a polling message from the alarm device.
Figure 11 is a flow diagram showing a process carried out on the polling servers for keeping an up-to-date database of ARCs.

### SPECIFIC DESCRIPTION OF CERTAIN EXEMPLARY EMBODIMENTS

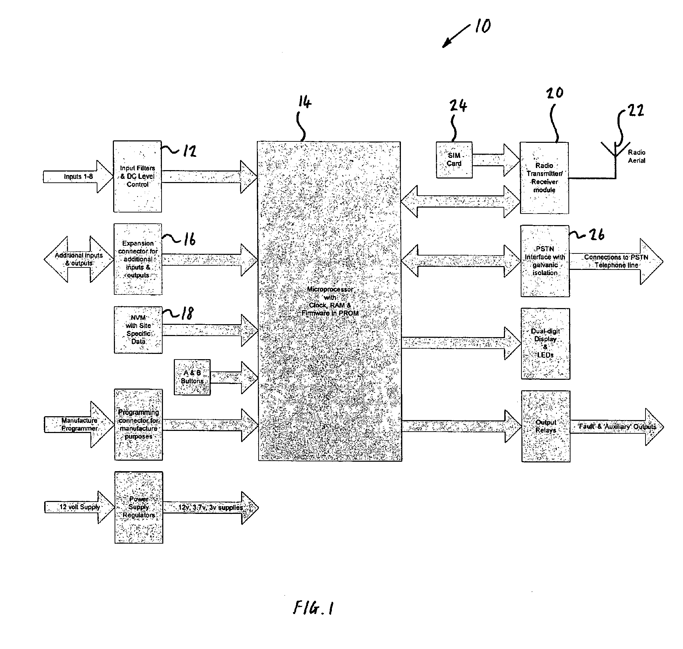

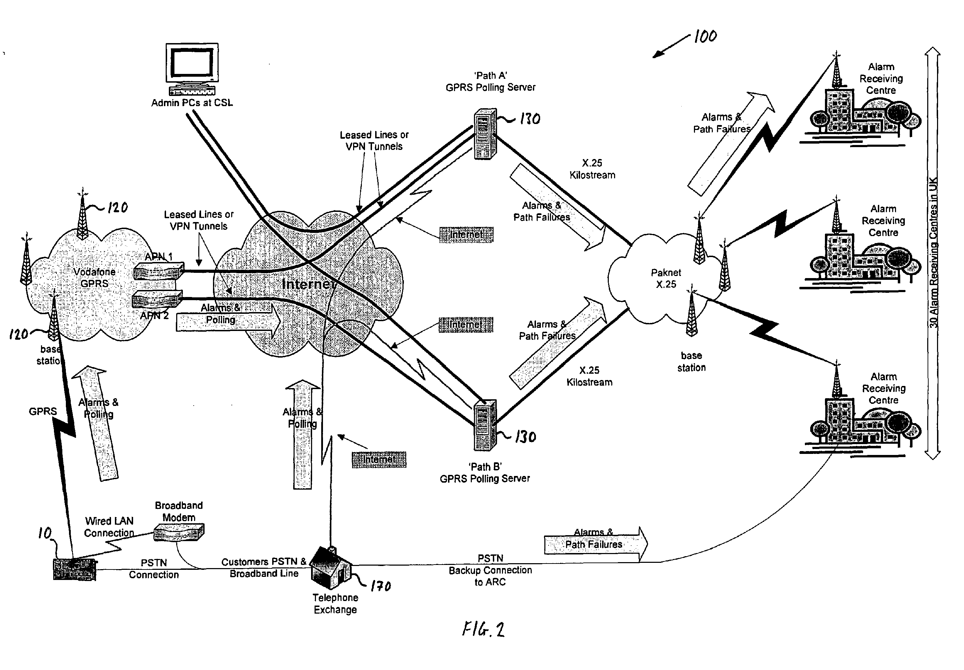

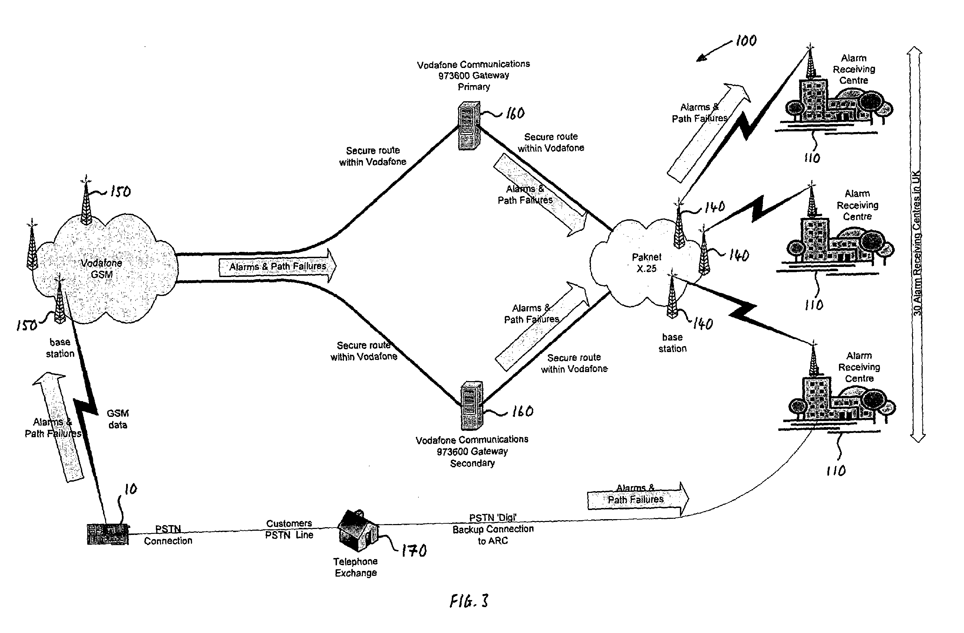

Figure 1 shows a communications device of a first embodiment of this invention for use in an alarm, which in this embodiment is an alarm 10 device acting as part of an intruder alarm. Whilst the remainder of the intruder alarm is not shown, it is envisaged that this would include a control panel, a keypad, and several motion detectors. As will be familiar to the skilled addressee, the keypad would be in communication with the panel and used for placing the alarm into an alarmed state and in exiting from that state. The motion detectors would also be in communication with the panel and would each transmit thereto a respective signal indicative of whether or not the detector detects motion. The panel would be connected to the device 10 for communication therewith. In general terms, the device 10 provides a communications link with the intruder alarm and the remainder of an alarm network (shown only in Figure 2 and Figure 3) of which the alarm, and hence the device 10, is part. Before describing the alarm network, however, the device 10 will be described in more detail.

With continued reference to Figure 1, the device 10 includes an input interface 12 that is connected to a microprocessor 14 to provide inputs thereto. The input interface 12 is for connecting to the control panel so as to receive inputs therefrom. The input interface 12 further includes input filters and DC level control circuitry to avoid damage to the microprocessor 14. The microprocessor 14 includes a clock, random access memory (RAM) and firmware stored in programmable read only memory (PROM). The firmware includes instructions in the form of code, executable by the microprocessor 14, to cause the microprocessor 14 to control operation of the device 10. The device 10 also includes an input/output (I/O) expansion interface 16 that is connected to the microprocessor for communication therewith. In this embodiment, the expansion interface 16 includes an Ethernet LAN interface for future needs. The device 10 also includes a non-volatile memory 18 in which is stored information specific to the site at which the device 10 is installed. The device 10 also includes a radio module 20, which is arranged to transmit and receive on the GSM radio network, both with and without using GPRS. Thus, the device 10 may be considered to have both a GPRS link and a standard (i.e. non-GPRS) GSM link, which will be referred to herein as a "GSM link" for simplicity. It will be understood that GPRS stands for General Packet Radio Service and that GSM stands for Global System for Mobile communications (although originally might have stood for Groupe Spécial Mobile). A radio aerial 22 is connected to the radio module 20 and is arranged for operation on the frequency of the GSM network and for use with GPRS. A SIM card 24 is also provided that stores account details and other communication details to enable the radio module 20 to operate on the GSM network and in accordance with GPRS.

The device 10 also includes a telephone line interface 26, which in this embodiment is a PSTN interface. The telephone line interface 26 provides communication with a PSTN telephone line. It will be appreciated that PSTN stands for Public Switched Telephone Network.

In this embodiment, the device 10 includes power supply regulators 19 such that the device is operable to be powered by a 12V power supply.

Figure 2 shows an alarm network 100 of which the alarm and hence the device 10 is part. The device 10 is at one end of the network 100, and alarm receiving centres (ARCs) 110 are at the other end of the network. As will be understood by the skilled addressee, an ARC is an establishment that provides support services to the users of alarms, including intruder alarms. For example, an ARC 110 may contact the police upon receiving a signal that an alarm has been set off, i.e. "raised"; or may contact a fire-fighting service in the case of a fire alarm. The network provides several communications paths between the device 10 and the ARCs 110. These can be divided into radio paths and wired paths.

A first radio path is provided by, at least partly, GPRS. This path is by GPRS radio between the device 10 and a GPRS base station 120; by land-line between the GPRS base station 120 and one of several polling servers 130, over one or more leased lines or VPN tunnels (VPN standing for virtual private network); and by land-line between the polling servers 130 and a base station 140 of a wireless network such Paknet by Vodafone (RTM), over an X.25 network such as that provided by Kilostream. Finally, the Paknet base station 140 communicates by radio with the ARCs 110 over the Paknet wireless network. Thus, the first radio path provides a GPRS communications link between the device 10 and the ARCs 110. This may therefore be considered a first radio link.

Back office servers 125 are provided at the premises of a company with responsibility for maintaining the device 10 and for providing an end user with access to and use of the remainder of the alarm network 100. The back office servers control operation of the polling servers 130 and can communicate with the device 10 via the polling servers 130, over the radio links.

Figure 3 shows further detail of the network 100 shown on Figure 2, this further detail being shown in a separate figure for clarity. With continued reference to Figure 3, a second radio path of the network 100 is provided, at least partly, by GSM, but without using the GPRS service. This path is by GSM radio between the device 10 and a GSM radio base station 150 (which may or may not be the same as the GPRS base station 120); and between the GSM base station 120 and one of the base stations 140 of the Paknet wireless network, over a secure land-line route, which in this embodiment is also provided by Vodafone. This secure land-line route is via a communications gateway secondary 160. As in the first radio path, in this second radio path, the Paknet base station 140 communicates with the ARCs 110 over the Paknet wireless network. Thus, this second radio path provides a GSM communications link between the device 10 and the ARCs 110. This may therefore be considered a second radio link.

With reference again to Figure 2, a wired path is provided using a PSTN line. The wired path is between the telephone line interface 26 of the device 10 and a telephone exchange 170, over a PSTN line; and between the telephone exchange 160 and the ARC 110, also over a PSTN line. Thus, the wired path provides a communications link between the device 10 and the ARCs 110. This may therefore be considered as a wired link between the device 10 and the ARCs 110. The telephone exchange 170 and the polling servers 130 are also connected to the Internet and so a wired link is additionally provided therebetween.

The method of operation of the device 10 will now be described. As mentioned above, the device 10 operates in accordance with instructions in the form of code stored as firmware in the microprocessor 14. It will therefore be understood that the code and hence the firmware is such that, when executed by the microprocessor 14, it causes the microprocessor 14 to operate in accordance with the following description.

Three modes of operation will be described. The method of operation has been divided into three modes at least partly for clarity of description. It is envisaged, however, that the device 10 may operate in one, two or all of the modes at the same time. The three modes are a standby mode of operation, an alarm mode of operation and a link failure mode of operation.

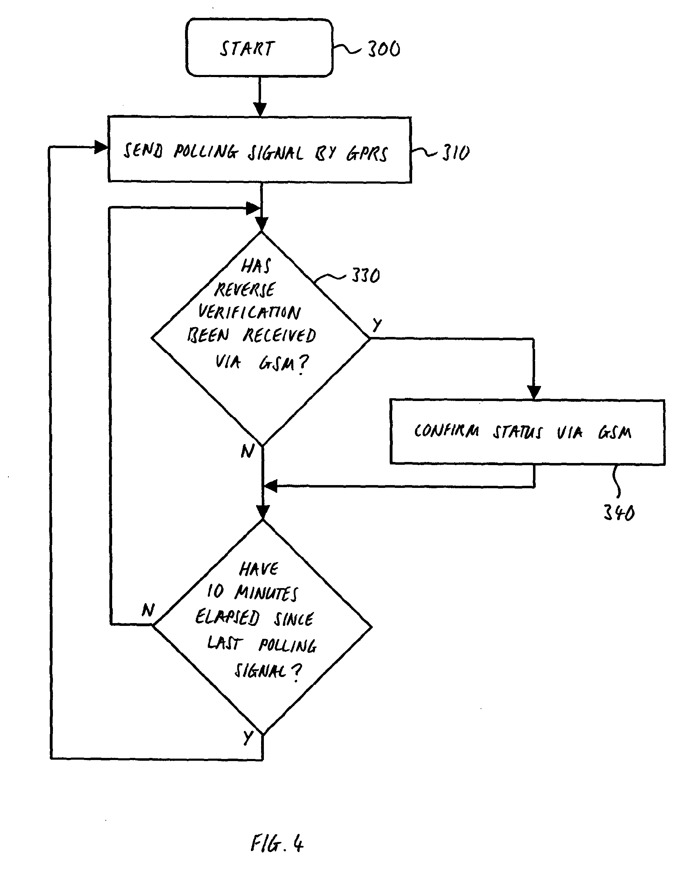

The standby mode of operation will be described first, with reference to Figure 4. In the standby mode, the device periodically sends a signal via the GPRS link to one of the polling servers 130 of the alarm network 100. In this embodiment, the signal is sent every 10 minutes. The signal is a polling signal that indicates to the polling server 130 that the device 10 is operating correctly. It is envisaged that the polling signal may also indicate that other components of the alarm are also operating correctly. If no polling signal has been received by any of the polling servers after 50 minutes, one of the polling servers 130 sends a signal to the device 10 over the GSM link. This signal is termed a "reverse verification notice". It is in effect an enquiry from the polling server 130 as to whether or not the device 10 is operating correctly. Upon receipt of the reverse verification notice, the device 10 attempts to send a reply signal via the GSM link to confirm that the reverse verification notice has been received and that the device 10 is able to respond thereto.

Accordingly, as can be seen in Figure 4, after entering the standby mode at step 300, the method of operation proceeds to step 310 in which the device 10 sends the polling signal via the GPRS link to one of the polling servers 130 of the alarm network 100. The method also includes a delay step 320 that introduces the ten minute delay before returning to step 310 and sending another polling signal. In addition, the method includes step 330 which checks for receipt of a reverse verification notice and, if such a notice has been received, causes the reply signal to be sent at step 340. The reply signal is indicative of the reverse verification notice having been received by the device 10 and of the device 10 being sufficiently operable to send the reply signal.

Upon receiving the reply signal, the polling server 130 takes this to mean that the GPRS link is not (or was not) operational, but that the GSM link is operational. Thus, it is evident that the device 10 is operational and that, of the two radio links, at least the GSM link is operational. This is considered sufficient for acceptable operation of the device 10 and the alarm, and so the polling server 130 does not send any related alert to the ARCs 110. Thus, provision is made against unreliability in the GPRS service.

If no reply signal is received at the polling server 130 from the device 10 in reply to the reverse verification notice, the polling server 130 sends an alert signal to one of the ARCs indicative of this.

The device 10 is considered to be in the standby mode, and operates in accordance with the foregoing description of that mode, regardless of whether or not the alarm has been "set".

In alternative embodiments, the device 10 additionally sends further polling signals over the wired link. It is anticipated that these would be sent less frequently. For example, if the first embodiment described above were modified to include polling over the wired link, such polling signals may be sent once per day. This allows the integrity of the wired link to be monitored, whilst avoiding the user incurring large PSTN call charges.

Rather like a mobile cellular telephone, the device 10 is constantly monitoring the signal strength of available radio carrier signals (without distinguishing between GSM and GPRS) and ascertaining the base stations with which it can communicate. In this way, the device 10 is able to detect when both the GSM link and GPRS link are inoperable. The device 10 is also able to detect when the PSTN link is inoperable. The device 10 does this by monitoring the DC voltage on the PSTN link from the telephone exchange and/or listening for a dial tone and dialling a number to see whether or not the dial tone ceases.

When the device 10 detects that both the radio links and the wired link are all operable, polling proceeds in accordance with the description of the standby mode set out above. Should, however, the device 10 detect that the radio links (i.e. both the GSM link and the GPRS link) have failed or that the wired link has failed, polling will continue on the remaining link, but usually with increased frequency that is at a "priority rate" that is more frequent than the normal rate of polling when all links are operable. Furthermore, upon detecting that a link has failed, the device enters the link failure mode described hereinbelow to communicate this failure to one of the polling servers 130 and one of the ARCs 110. Communicating the failure to the polling server 130 allows the polling server 130 to expect the polling at the "priority rate" and on the sole operable link. Communicating the failure to the ARC 110 allows personnel at the ARC 110 to take appropriate action such as, for example, sending a technician to check and if necessary repair the inoperable link. The police would not normally be notified upon receipt by the ARC 110 of the link failure signal as such receipt means that at least one of the links is still operational.

The alarm mode will now be described.

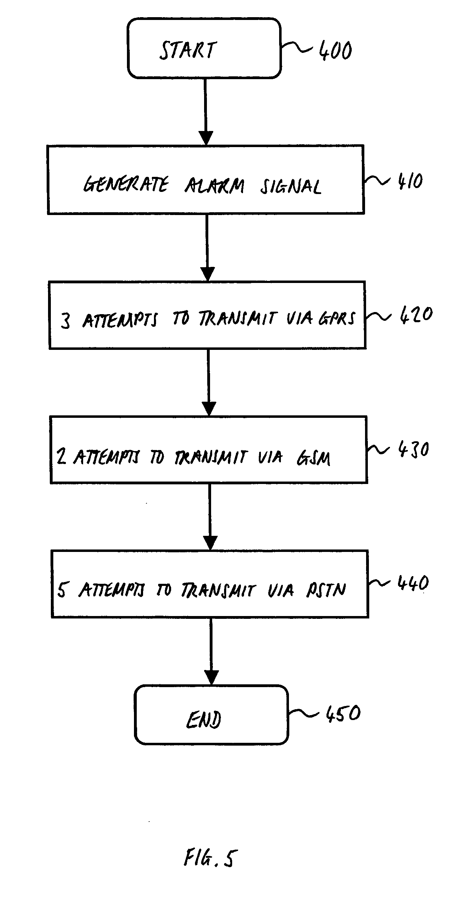

Should the device 10 receive an indication that an alarm condition has been met, such as by receiving a signal from the control panel to the effect that one of the motion detectors has sensed motion whilst the alarm was "set", the device enters the alarm mode. In the alarm mode, the device 10 generates and attempts to send an alarm signal to one of the ARCs 110 such that appropriate action may then be taken. This is done by executing the call routine shown in Figure 5. With continued reference to Figure 5, the call routine starts at step 400. The routine proceeds to step 410 in which the alarm signal is generated, the alarm signal being indicative that the alarm condition has been met. The routine then proceeds through three steps 420, 430, 440 in which the device 10 attempts to transmit the alarm signal to one of the ARCs. In step 420, the device 10 makes three attempts to transmit the alarm signal over the GPRS link. In step 430, the device makes two attempts to transmit the alarm signal over the GSM link. In step 440, the device 10 makes two attempts to transmit the alarm signal over the wired link. Step 440 is then repeated nine times.

Should the device 10 receive back from an ARC 110 a "kiss off' acknowledgement signal (not shown in Figure 5 for simplicity) during the call routine, the routine ends and the device 10 exits the alarm mode.

By making repeated attempts on each of the different links, the device 10 increases the chances of the alarm signal being successfully transmitted to the ARC 110. In particular, should one or two of the links become inoperable, such that only one link remains operable, the attempted transmission on the remaining operable link will result in successful communication with the ARC 110.

The device 10 follows the call routine described above with reference to Figure 5 as long as the device 10 detects that both of the radio links and the wired link are operable. Should, however, the device 10 detect that either of the two radio links are inoperable or the wired link is inoperable, the device 10 will not attempt to make any calls on that link when following the call routine.

The link failure mode will now be described.

As mentioned above in relation to the standby mode described with reference to Figure 4, upon detecting that either (a) the wired link over the PSTN line is inoperable or that (b) both the GPRS link and the GSM link are inoperable, the device 10 enters the link failure mode. In the link failure mode, the device 10 generates and attempts to send a link failure signal to one of the polling servers 130 and then to one of the ARCs 110 such that appropriate action may then be taken. This link failure signal is generated and its sending attempted by the device 10 again following the call routine described above with reference to Figure 5 and as shown in that figure.

Again, by making repeated attempts on each of the different links, the device 10 increases the chances of the link failure signal being successfully transmitted to the polling server 130 and the ARC 110. It could, at first sight, be thought unnecessary to attempt to transmit the link failure signal over the link that is inoperable, but following the same procedure regardless of which link is inoperable simplifies the software and processing operations of the device 10 and additionally increase the chances of the link failure signal being successfully transmitted in the event that the previously inoperable link again becomes operable.

From the foregoing description of the polling mode with reference to Figure 4, it will be understood that, should both radio links have failed, then one of the ARCs will also have received an alert signal from one of the polling servers to the effect that no reply was received from the device 10 to a reverse notification signal from the polling server 130. This would act as confirmation that both radio links are inoperable.

It can therefore be seen that the described embodiment, by providing multiple radio links, and an associated method determining how these links are used, provides an arrangement in which the chances of an alarm signal being conveyed to the ARCs 110 is increased and which is able to continue to operate satisfactorily even if certain of the links should become inoperable.

As can be seen in Figure 2, this embodiment also includes a wired LAN connection from the device 10 to a broadband modem 105. The broadband modem 105 is connected to the PSTN line and hence to the telephone exchange 170. In this way an additional wired link in the form of a broadband link is provided. This broadband link may be used in addition to or instead of the wired link described above.

In a first alternative embodiment, the device 10 described above with reference to Figure 1 to Figure 5 is modified in being arranged to be powered by a power supply supplying any voltage in the range of 9V to 30V. It is envisaged that this would be done by providing the device with two switch mode power supplies. Whilst existing intruder alarms usually operate at 12V, many existing fire alarms operate at 24V. Providing the device with the ability to operate over a wider range of supply voltage therefore means that the same device may be used as either part of an intruder alarm or as part of a fire alarm.

In a second alternative embodiment, the device 10 described above with reference to Figure 1 to Figure 5 is modified to include logging memory means in the form of non-volatile memory. The logging memory means retains a record of all outgoing calls made and/or attempted by the device. Thus, a record may be made of one or more of the number and path of completed and/or failed attempts to transmit the alarm signal to the ARCs, and of the attempted time and date; and of completed and/or failed attempts to transmit the polling signal and, again, of the attempted time and date. Periodically, the device 10 transmits the record of outgoing calls stored on the logging memory means to the back office server 125 and deletes these from the logging memory means. In other words the logging memory means periodically "dumps" the information stored therein to the back office server 125.

The information recorded by the logging memory means in the second alternative embodiment is useful in the event, for example, of an insurance claim resulting from a break in or fire at the premises protected by the device 10. The recorded information indicates what happened at the device 10 and what, if anything, went wrong with the device 10 or in the operation thereof to prevent the alarm being raised or being raised in a timely fashion.

In a third alternative embodiment, the device 10 is provided with a serial interface in the form of a serial bus. The serial bus is a 485, four-wire connection, but it is envisaged that almost any type of serial connection may be used. The serial interface provides an expansion capability to the device 10 in that it allows other electrical devices to be connected thereto for communication therewith.

In a fourth alternative embodiment, it is possible remotely to change the "grade" of the device 10 such that the grade of the alarm of which the device is part is also changed. It will be appreciated by those skilled in this area of technology that the relevant European standard governing intruder alarms (EN 50131) defines four grades of intruder alarm, with Grade 1 alarms providing the lowest level of protection and Grade 4 alarms providing the highest level of protection. Some characteristics of the grades are set out below.

Grade 1 - Low security risk. Potential intruders are expected to have little knowledge of intruder alarms and to have access only to easily available tools. Grade 1 alarms would usually be user-installed domestic alarms.

Grade 2 - Low-to-medium security risk. Potential intruders are expected to have a limited knowledge of intruder alarms and to have access only to a general range of tools. Grade 2 alarms include better domestic alarms and alarms for small shops.

Grade 3 - Medium-to-high security risk. Potential intruders are expected to be familiar with intruder alarms and to have access to a comprehensive range of tools. Grade 3 alarms are usually to be found protecting offices, public houses, nightclubs and larger shops.

Grade 4 - High security risk. Potential intruders are expected to have the ability and resources to plan an intrusion in detail and to have access to a full range of specialised equipment. Grade 4 alarms include those used to protect banks, jewellery stores and bullion storage facilities.

In the present alternative embodiment, the grade of the device 10 determines one, more or all of the following characteristics of the device: the rate at which the device 10 sends polling signals to the polling server 130; the period after which the polling server 130 sends an alert signal to one of the ARCs following a failure by the polling server 130 to receive a polling signal over any of the links from the device and a failure by the polling server to receive a signal from the device indicating that a reverse verification signal has been received.

The firmware of the device 10 contains a record of the relevant settings that determine these characteristics and hence the grade of the device 10. A record of the grade of the device is also stored at the polling server 130.

In order to change the grade of the device 10, the device 10 receives update information from the back office server 125, via the polling server 130, over one or both of the radio links. The update information is such that it updates the relevant settings recorded in the firmware of the device 10 to change the grade of that device 10 and updates the polling server 130 with the new grade for the particular device 10.

Included below are three tables, one for each of Grade 2, 3 and 4 and setting out the relevant settings of the device 10.

**Table 1: Example of Grade 2 Settings**

| | **Status of device as perceived by polling server** | **Frequency of radio polling** | **Frequency of wired polling** | **Action by the polling server** |
|---|---|---|---|---|
| **Scenario 1:** | All links are OK | Normal rate (1 poll/hour) | Normal rate (1 poll/week) | If polling server receives: no polling signal on any link; no reply to reverse verification notice; and no link failure signal, polling server alerts ARC after 1 day |
| **Scenario 2:** | Radio link has failed | No polling on failed link | Priority rate (lpoll/week) | If polling server receives: no polling signal on any link; and no reply to reverse verification notice, polling server alerts ARC after up to 1 week |
| **Scenario 3:** | Wired link has failed | Priority rate (1 poll/hour) | No polling on failed link | If polling server receives: no polling signal on any link; and no reply to reverse verification notice, polling server alerts ARC after 1 day |

**Table 2: Example of Grade 3 Settings**

| | **Status of device as perceived by polling server** | **Frequency of radio polling** | **Frequency of wired polling** | **Action by the polling server** |
|---|---|---|---|---|
| **Scenario 1:** | All links are OK at the device | Normal rate (1 poll/10 minutes) | Normal rate (1 poll/day) | If polling server receives: no polling signal on any link; no reply to reverse verification notice; and no link failure signal, polling server alerts ARC after 1 hour |
| **Scenario 2:** | Device's radio link has failed | No polling on failed link | Priority rate (lpoll/day) | If polling server receives: no polling signal on any link; and no reply to reverse verification notice, polling server alerts ARC after up to 1 day |
| **Scenario 3:** | Device's wired link has failed | Priority rate (1 poll/10 minutes) | No polling on failed link | If polling server receives: no polling signal on any link; and no reply to reverse verification notice, polling server alerts ARC after up to 20 minutes |

**Table 3: Example of Grade 4 Settings**

| | **Status of device as perceived by polling server** | **Frequency of radio polling** | **Frequency of wired polling** | **Action by the polling server** |
|---|---|---|---|---|
| **Scenario 1:** | All links are OK at the device | Normal rate (1 poll/10 minutes) | Normal rate (1 poll/day) | If polling server receives: no polling signal on any link; no reply to reverse verification notice; and no link failure signal, polling server alerts ARC after 1 hour |
| **Scenario 2:** | Device's radio link has failed | No polling on failed link | Priority rate (lpoll/3 minutes) | If polling server receives: no polling signal on any link; and no reply to reverse verification notice, polling server alerts ARC after 7 minutes |
| | | | | If continues, may use back office server to set device to poll 1/day on wired link |
| **Scenario 3:** | Device's wired link has failed | Priority rate (1 poll/3 minutes) | No polling on failed link | If polling server receives: no polling signal on any link; and no reply to reverse verification notice, polling server alerts ARC after 7 minutes |

The device of this embodiment may be any of Grade 2, 3 or 4.

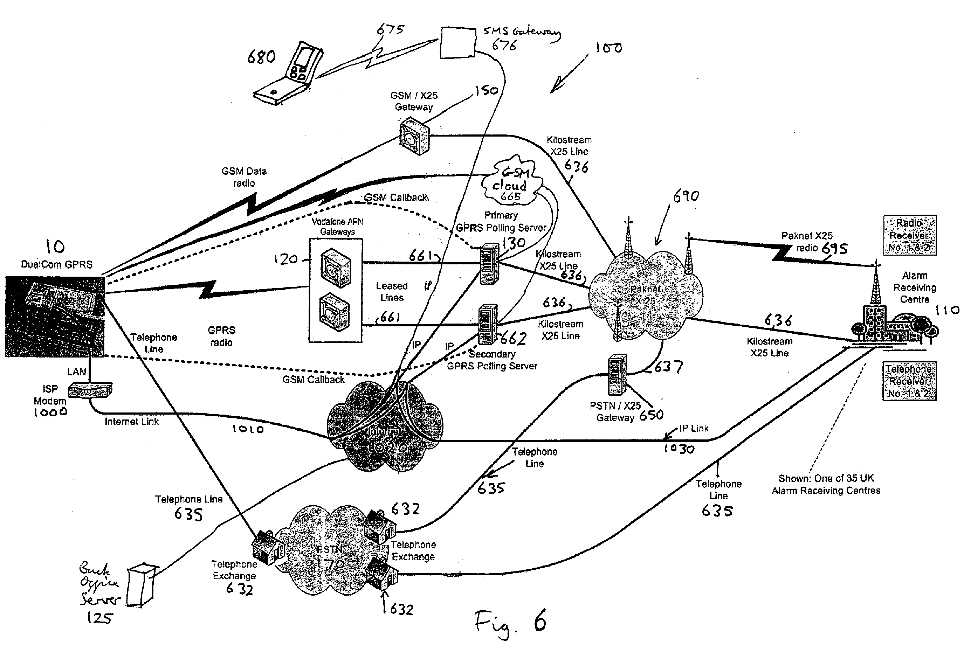

Figure 6 shows a fifth alternative embodiment, similar to the embodiment described above with reference to Figures 1 to 5. This embodiment will be described with particular emphasis on the polling servers and the alarm gateway (it being understood that, in the embodiment described above with reference to Figures 1 to 5, particular emphasis was placed on the alarm device). In Figure 6 shows an alarm network having an alarm device 10 as previously described, which in this embodiment is an intruder alarm. Also shown is an Alarm Receiving Centre, or ARC 110, also previously described. Two polling servers 130 are provided in the form of primary and secondary polling servers 130, 662. The two polling servers 130 are substantially the same as each other and relay alarm messages from the alarm device 10 to the ARC 110 via an alarm service network 690. Two polling servers are provided for redundancy in the event of failure of one of the polling servers. Each polling server 130 is connected to the alarm service network 690 by a kilostream x.25 line which is routed via a different physical location so as to avoid both connections being lost if, for example, roadworks cause damage to the physical cable. Accordingly hereinafter, only one polling server will be referred to. An example of an alarm service network is the "Paknet" alarm service network. In other embodiments there can be more than one ARC 110.

The polling server (130) is connected by a leased line (661) to a GPRS radio gateway (120). Each GPRS gateway (in the shown embodiment there are two) contains all necessary hardware and software to form a GPRS radio connection with the alarm device (10), for passing information between the alarm device (10) and the polling server (130, 662). The polling server is also connected to the alarm service network (690) by a kilostream X.25 line (636) which allows the passing of messages to and from the polling server and the alarm service network. Additionally, the polling server 130 is connected to a GSM cloud 665, which is a GSM radio telephone network, in order to provide GSM radio connectivity between the polling server 130 and the alarm device 10. The GSM cloud 665 is arranged to allow the polling server or a human operator to send messages to the alarm device 10.

The polling server is also connected to the internet (1020). This, connection is a Virtual Private Network (VPN) over Internet Protocol, but in other embodiments could be a leased line, depending on the amount of anticipated traffic over the connection. Also connected to the internet (1020) is the alarm device (10), which is also connected to the GPRS gateway (120) by a GPRS radio link. The alarm device (10) is also connected to the internet via an ISP modem (1000) and an internet link (1010) arranged for communication using internet protocol. In the present embodiment in which the modem (1000) is separate from the alarm device (10), the two are connected via a local area network or ethernet cable (although in other embodiments a USB connection or other connection capable of carrying data could be used). The ARC is also connected to the internet (1020) by an IP (internet protocol) link (1030). This allows a reduction in the number of telephone lines that the ARC owner has to provide, with associated cost savings. Also connected to the internet is a back office server (125) which is a computer server maintained by the company with responsibility for maintaining the alarm device (10), and is arranged to store information and provide for access by the polling server (130) to information stored on the back office server (125). The internet link provides an additional link which improves path redundancy and diversity, thereby reducing the risk of no connection path being operable between the alarm device and the ARC or polling server. In other embodiments, the internet links are optional and/or the modem can be comprised in the alarm device (10), rather than the modem (1000) being a separate entity.

A result of using the internet to connect the alarm device to the ARC (110) and/or polling server (130) is that there are no separate charges for each message sent, as there would be for example if messages were sent via a PSTN telephone call. Instead, internet connections tend to be charged on a fixed monthly rate and this billing scheme may be more attractive to an owner of a site at which the alarm device is installed.

Also connected to the internet (1020) is an SMS gateway (676) which is arranged to send SMS messages to a mobile phone (680) over GSM or GPRS and is connected via the internet (1020) to the polling server (130).
The alarm service network (690) is also connected to at least one ARC (110) by a kilostream X.25 line (636) and by an X.25 radio link (for example, a Paknet X.25 radio link) (695). These connections are arranged to carry signals, messages and data between the alarm service network (690) and the ARC (110). In some embodiments, only one of these connections may be used.

The alarm service network (690) is additionally connected to an alarm gateway (650) by a further kilostream X.25 line (637). The alarm gateway (650) is connected to the PSTN (170) by a telephone line (635) and to an alarm service network (690). The alarm gateway (650) is operable to forward alarm-related messages, received from the alarm device (10) via the PSTN (170), to the alarm service network (690). Alarm-related messages include alarm messages indicative of an alarm condition having been met, status messages (including path failure messages indicative of a connection path between the alarm device and the polling server being inoperative) and polling messages indicative of the alarm device (10) being operative and connected to the polling server. An example of such an alarm gateway (650) is the GEMINI GATEWAY (TM) maintained by CSL (DUALCOM) LIMITED.

The PSTN incorporates telephone exchanges (632) and an example of a PSTN is the type operated by British Telecommunications PLC in the UK. This arrangement allows the alarm gateway (650) to be connected by the PSTN (170) to any other device which is connected to the PSTN (170), thereby effectively extending the coverage range of the alarm service network (690). An example of such a device is the alarm device (10) shown in Figure 6 which is connected to the PSTN (170) by a telephone line (635).

The alarm gateway (650) is provided with a toll-free telephone number address on the PSTN. Thereby, messages sent to the polling server (130) by the alarm device (10) by way of a telephone call to the alarm gateway (650) via the PSTN do not incur a charge per call. Instead, the polling server (130) provider (the company which provides the alarm gateway as part of a service provided to the owner of the site being monitored) is able to charge a fixed monthly subscription to the owner of the site being monitored in exchange for providing access to the polling server via the alarm gateway. In many cases this billing arrangement, enabled by the alarm gateway, is preferable to the owner of the site being monitored.

The ARC (110) is also connected to the PSTN (170) by a telephone line (635), and thereby to the alarm device (10) via the PSTN (170).

The alarm service network (690) is additionally connected by a kilostream X.25 line (636) to a GSM /X25 gateway (150) which is arranged to provide a connection between the alarm service network (690) and a mobile telephone (680) and the alarm device (10) via a GSM radio connection (675). The GSM gateway (150) contains routing hardware and is arranged to provide a secure connection between the alarm device and the alarm service network (690) for receiving messages from the alarm device.

It will appreciated that although the "Paknet" type of alarm service network (690) is arranged with kilostream X.25 lines for interconnecting it with various other devices of the alarm network (100), in other embodiments other types of connection protocol could be used instead for the interconnections.

The system shown in Figure 6 is constructed using elements commonly in use, such as telephone lines (635), telephone exchanges (632), a PSTN (170), and existing ARCs (110). The primary polling server (130), secondary polling server (130) and alarm gateway (650) are constructed using standard server equipment in conjunction with standard interfaces to telephone lines, kilostream X.25 lines, and leased lines.

In operation, as previously described for the similar embodiment shown in and described with reference to Figures 1 to 5, alarm signals (indicative of an alarm condition, as previously defined, existing at the site at which the alarm device is installed, for example an intruder having triggered a motion sensor), referred to as "alarm messages in this embodiment can be sent from the alarm device (10) to the ARC (110) by the telephone line (635) connecting the alarm device (10) to the PSTN (170), through the PSTN (170) and along the telephone line (635) connecting the PSTN (170) to ARC (110). This provides one way for the alarm device (10) to send alarm messages and other messages (for example status messages indicating certain status information about the alarm device) to the ARC (110). The ARC (110) is then able to inform the police or a responsible person who can then investigate the site.

Alarm messages, status messages (including "path failure messages) and polling messages can also be sent from the alarm device (10) to the ARC (110) through the internet (1020), via the ISP modem (1000), internet link (1010) and IP link (1030). This provides another route for the alarm device (10) to send alarm messages and other messages to the ARC (110).

Alarm messages can also be sent from the alarm device (10) to the ARC (110) via the polling server (130) by way of the GSM radio link and the GSM gateway (150).

A further route which the alarm device is able to use in operation to send alarm messages and other messages to the ARC (110) is via the GPRS radio link to the GPRS gateway (120). The GPRS gateway passes all messages received over the GPRS link to the polling servers (130). Similarly, the GSM gateway passes all messages received over the GSM radio link to the polling server (130). The polling server then selectively sends appropriate messages to the alarm service network (690). The alarm service network then sends the messages from the polling servers (130, 662) to the ARC (110). In this way, the alarm device is able to send alarm messages and other messages to the ARC (110), and thereby is able to signal to the ARC (110) if an alarm condition exists, even if one or both of the telephone line (635) linking the alarm device to the PSTN (170) and the internet link (1010) linking the alarm device to the internet (1020) are disabled or malfunctioning. Likewise, should the GPRS radio link fail, the alarm device (10) is able to send alarm messages or other messages to the ARC (110) over one of the GSM radio link, the telephone line (635) and the internet link (1010).

In operation, as previously described, if the alarm device (10) detects that either the telephone line (635) connection to the PSTN is inoperative, or the GPRS or GSM radio link is inoperative, the alarm device (10) sends a link failure signal, in this embodiment referred to as "path failure message" to the polling servers (130, 662) to indicate that the inoperative path is inoperative. The path failure message is sent to the polling server over the remaining operative path, although it may be attempted to be sent over the inoperative path also.

Also as previously described, the alarm device (10) periodically sends a polling signal, in this embodiment referred to as a polling message, to the polling server (130) at least once per predetermined time period. This predetermined time period is shortened if the device has detected that one of its links to the polling server (either the wired link or the GPRS radio link) has become inoperative, and is lengthened again when the inoperative path becomes operative again. The time periods are as given in tables 1 to 3. The alarm device (10) sends an explicit signal to the polling server (130) to indicate that the previously inoperative path has become operative again. In other embodiments the polling server can alternatively infer from reception of another message or signal that the path is again operative.

Accessible to the polling server (130) via an internet connection is a database maintained on the back office server (125) which is remote from the polling server (130). The database contains a number of entries for each alarm device (10), each alarm device (10) having its own alarm device ID code which uniquely identifies the alarm device (10) in the alarm network (100). For each alarm device (10), the database contains entries including the alarm device ID code, the postal address or postcode for the site at which the alarm device 10 is installed, the security grade at which the alarm device 10 is to operate, the subscriber account status (i.e. whether or not the subscriber's bill been paid), the contact address of the polling server 130 and ARC 110 assigned to the alarm device 10 and the status of the wired and radio connection links from the alarm device 10 to the polling server 130 (i.e. are they alive or dead). The database also contains entries for the dispatch date of the alarm device, the time of the first polling message received by the polling server, the installer, the GSM telephone number and the chip number. The chip number is used by the ARC to identify the alarm device under its responsibility. The security grade determines the frequency at which the device sends (and the polling server 130 expects to receive) polling messages, and in some embodiments also the priority level of service in the polling server (130), alarm service network (690) and ARC (110).

In other embodiments, the polling server 130 may be connected to the back office server (125) via another connection, such as for example a leased line. Further, in some embodiments some of the database fields may be omitted, for example the ARC contact address may be omitted if all alarm devices 10 were known to use a single ARC 110.

The provision of the database on the back office server (125) and access by the polling server 130 thereto allows the polling server 130 to perform checks on an alarm device 10 when the polling server 130 receives a message from the alarm device 10, before the polling server 130 takes action in response to the message. The polling server 130 is also able to send data to the back office server 125 in order that the back office server 125 can update database entries in order to maintain the database contents up to date. In this way, the database at the back office server is kept up to date with the contents of a local copy of the database which is kept on the polling server (130). Therefore it is not necessary to access the polling server to search the database, thus reducing risk of a system error on the polling server.

It is also easier to rebuild a polling server after a major malfunction since the back office server can send a copy of its database to the polling server in order to help set up the rebuilt polling server. Further, it is easier to add ARCs (110) to the alarm system (100) since the change can be made on the back office server database and then pushed out (copied) to the polling servers and alarm devices automatically. It is also easier to maintain backups of data because data is held in the central back office server database.

The provision of the database on the back office server 125 and access thereto via the internet 1020 also allows an operator terminal (not shown), which is a computer running a client program, to access the back office server 125 in order that an operator can use the operator terminal to create a new database entry for a new alarm device 10. The back office server includes a server program which communicates with and interacts with the client program running on the operator terminal. The operator is able to request from the back office server 125 that a new alarm device be configured and delivered to a postal address specified by the operator (which is, for example the operator's home or business address, or the address of the new site to be monitored). The operator is able to specify the configuration data which is to be initially programmed into the new alarm device 10 such that the alarm device 10 is supplied by the back office server operator in a pre-configured form to an installer (who may be the operator of the operator terminal).

After the alarm device 10 has been installed at a site to be monitored, and the alarm device 10 is thereby in connection with the polling server 130, the user terminal operator is able (via the connection between the operator terminal and the back office server 125, and the connection between the polling server 130 and the back office server 125) to update database entries for the alarm device 10. The back office server 125 then, via the polling server 130, sends the updated configuration data to the alarm device 10. The alarm device 10 updates its internally stored configuration data and is then able to operate using the updated configuration data (which includes, for example, user preferences). Thus, an operator of the operator terminal is able to both order a new alarm device 10 containing specified configuration data, and is able to remotely update existing alarm devices 10 with new configuration data values.

The operator of the operator terminal is able to remotely change the security grade of the alarm device 10 (as previously described with reference to Tables 1-3). A result of this ability is that, should the maximum number of police call-outs in a year be exceeded by an alarm device 10 at a particular site being monitored (in which case the police will refuse to subsequently attend the site in the event of a further alarm being raised by the alarm device 10 via the ARC 110), the operator can remotely change the security grade of the site, the effect of which is that police call-out response will be restored.

In operation, in the case of the alarm gateway (650) receiving a message from the alarm device (10), the alarm gateway forwards the message via an X.25 line (637) to the alarm service network (690). The alarm service network (690) then sends the information either by radio link (695) to the ARC (110) or by kilostream X.25 line (636) to the ARC (110), depending on the ARC connectivity. As before, the ARC (110) can then inform the appropriate responsible person in order that they may take action.

The operation of the polling server (130) will now be described.

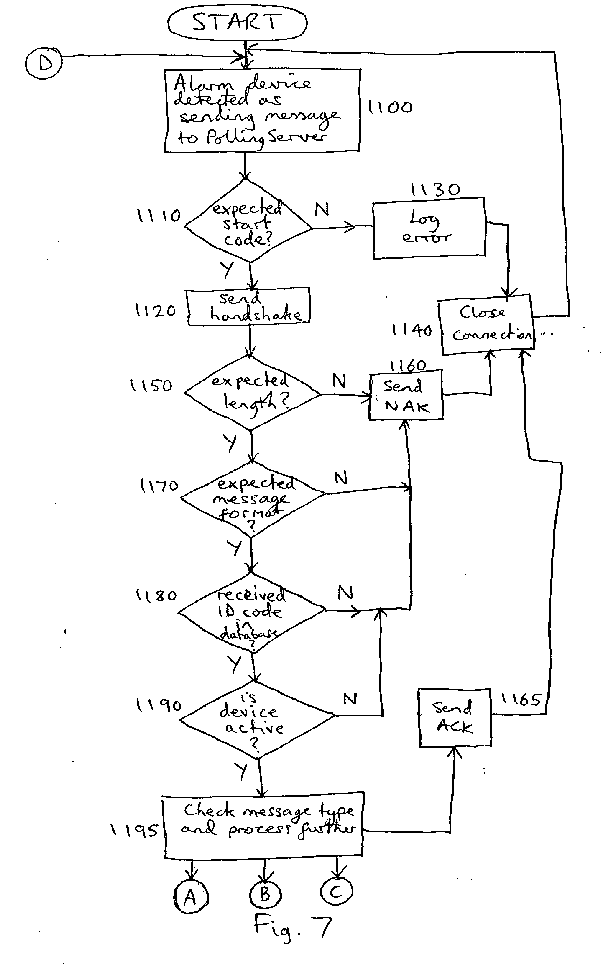

Figure 7 shows a message validation routine wherein messages received by the polling server from the alarm device (10) are validated by performing certain checks on the message contents. Figure 7 shows the sequence of operations which the polling server (130) executes when a message is received from the alarm device (10) by the polling server (130) over any of: i) the telephone line (635) via the PSTN (170), the alarm gateway (650) and the alarm service network (690); ii) the ISP modem (1000) via the internet link (1010) and the internet (1020); iii) the GPRS radio link via the GPRS gateways (120) and leased lines (661); and iv) the GSM radio link via the GSM gateway (150) and associated kilostream X.25 link (636).

At step 1100 the polling server (130) receives a message in the form of a signal from the alarm device 10. At this step, the polling server (130) does not know the origin of the message. At step 1110 the polling server compares a start code contained in the message with a predetermined value in order to determine whether or not the start code in the message is valid. If the start code does not match the predetermined value then a log is kept of the match failure at step 1130 and the connection with the device is closed at step 1140, the process then coming to a halt until another message is received. This check helps to avoid effort being expended in the event of a large number of messages being received from a device which is not an alarm device (such as in a "denial of service" attack situation).

If the start code matches the predetermined value then at step 1120 a handshake is sent to the alarm device (10) which sent the message. Then, at step 1150, the length of the message is checked to see that it falls within a predetermined expected range of lengths. If the length is as expected, then at step 1170 other checks are made on the format of the message (including, that certain fixed fields are present in the message at expected positions within the message). The message format is expected to be "Fast Format" as known in the field of alarm systems. In some embodiments, certain checks may be omitted, depending on the level of security required.

If the message format check is passed then at step 1180 an alarm device ID code (which in this embodiment is a code comprising 20x 8bit digits) which is present in the message and which uniquely identifies the alarm device 10 which sent the message, is checked against a database entry. The ID code can uniquely identify an alarm device 10 due to the number of digits in it being sufficient to allow a unique code to be assigned to every alarm device 10 (the projected number of alarm devices 10 in operation being less than the total number of possible different codes).

A check is made by the polling server 130 at step 1180, by referencing the database on the back office server 125 or a copy thereof local to the polling server, that the alarm device ID code relates to an alarm device 10 at a particular postal address which is known to have an alarm device installed and operated by a particular operator. Then, at step 1190, a check is made that the alarm device is "active". A device is active if it is allowed to operate on the network, and this may be associated with a subscription fee having been paid. In this way, messages sent to the polling server 130 from alarm devices 10 which are not registered as having their associated subscription paid up to date can be rejected, resulting in an ability to automatically limit access to the alarm network to those subscribers who have paid the relevant subscription fees.

If any of the checks at steps 1150, 1170, 1180 and 1190 are determined not to have been passed (i.e. the check results in a negative result) then at step 1160 a "no acknowledgement", or "NAK", message is sent to the device which sent the message to the polling server (i.e. the alarm device), so as to indicate to that device that the message it sent to the polling server 130 has been rejected and will not be processed by the polling server 130. In other embodiments, a NAK message is not sent and the alarm device 10 instead infers rejection of the message it sent to the polling server 130 by the lack of a response from the polling server. In still further embodiments, the alarm device 10 assumes that all messages it sends are acted on by the polling server, even if the polling server 130 does not act on them.

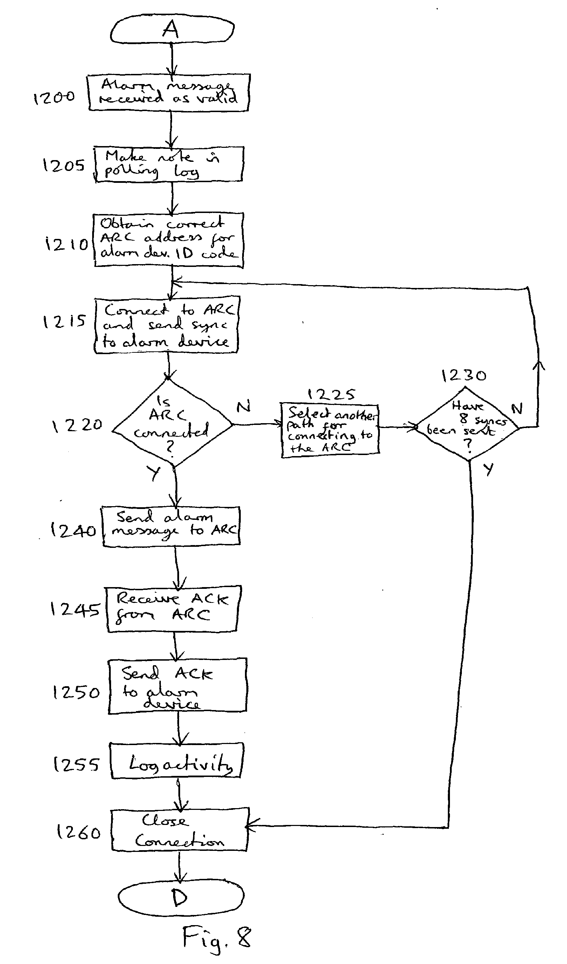

If all of the checks at steps 1150, 1170, 1180 and 1190 are determined to have been passed then at step 1195 the polling server checks the message type contained in the message to determine the type of message received (which may be one of an alarm message, a path failure message and a polling message) and then processes the message and its contents further, which includes a step 1165 of sending an ACK message to the alarm device, closing the connection with the alarm device at step 1140 and taking other action as appropriate and described below. The step of closing the connection is delayed for some message types until the steps shown in Figures 8 to 10 have completed.

By including the check at step 1180, wherein the alarm device ID code is checked for validity, a secure "Access Point Name" ("APN") connection is implemented between the alarm device (10) and the polling server (130) such that only valid alarm devices (10) which are recorded on the database are allowed to communicate with the polling servers (130, 662). This can prevent other devices "freeloading" (obtaining alarm services for free) on the alarm network. The other checks at steps 1110, 1150 and 1170 strengthen the validity check on the message origin but are not essential.

Figure 8 shows an alarm message processing routine, whereby alarm messages which have previously been validated are processed further and ultimately sent to the ARC by the polling server. Figure 8 shows the sequence of operations executed by the polling server (130) when an alarm message (or signal) is received from an alarm device (10) by the polling server (130). At step 1200 an alarm message is received from the alarm device (10) indicating that an alarm condition has been met at the alarm device. The alarm message has previously been validated by the steps shown in Figure 7.

At step 1205 a record is kept of the receipt of the valid alarm message. At step 1210 the polling server determines the address of the ARC which is designated for sending the alarm message to. This step includes referencing the local polling server copy of the database maintained at the back office server. Then, at step 1215, the polling server connects to the ARC. In order to connect to the ARC, the polling server sends up to 8 "sync" signals to the alarm device in order to tell it to wait, while the polling server attempts to connect to the ARC. At step 1220 the polling server determines whether or not the ARC is connected to the polling server, by virtue of its response. If the ARC fails to respond in a way which the polling server understands as indicating that the ARC is connected, the polling server at step 1225 selects another connection to the ARC (from the Paknet X.25 radio link 695, the IP link 1030, and the kilostream x.25 line 636). Then at step 1230 the polling server checks that no more than 8 syncs have been sent to the alarm device 10. If 8 syncs have been sent, the polling server closes the connection with the alarm device without acknowledging that the alarm has been successfully sent to the ARC. If less than 8 syncs have been sent, the polling server reattempts to connect to the ARC.

If the polling server successfully connected to the ARC at step 1220, then at step 1240 the polling server sends the alarm message to the ARC and at step 1245 waits for an acknowledgement from the ARC that the alarm message was correctly received by the ARC. The polling server then sends a corresponding acknowledgement message to the alarm device so as to indicate that the alarm message has been relayed to the ARC. If the ARC fails to respond as expected at any point, such that the polling server is uncertain whether or not the alarm message reached the ARC, then the polling server sends a non-acknowledgement (NAK) message to the alarm device. Alternatively, in some embodiments the alarm device can infer by non-reception of an acknowledgement message from the polling server that the alarm message was not received.

At step 1255 the polling server enters a record into a log, recording the relaying of the alarm message to the ARC. The polling server closes its connections with the ARC and with the alarm device at step 1260 and the process returns to the start of the routine shown in Figure 7.

In some embodiments, the alarm message may also optionally be considered to be a valid polling message since it implicitly indicates that the connection with the alarm device over which it was received is operable. Also, in some embodiments, the log keeping may be minimised or omitted.

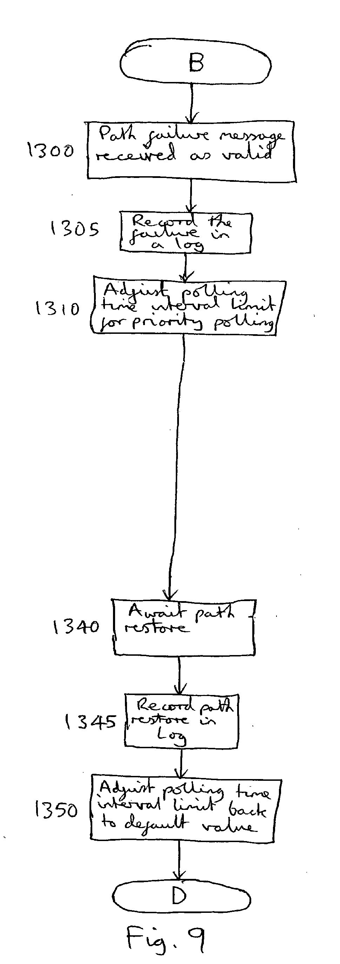

Figure 9 shows a path failure message processing routine which is executed by the polling server upon reception of a path failure message which has been validated by the steps of the routine shown in Figure 7. Figure 9 shows the sequence of operations executed by the polling server (130) when a path failure message (or signal) is received from an alarm device (10) by the polling server (130).

At step 1300 the polling server receives a path failure message from the alarm device, indicating that one of the GPRS radio link, the GSM radio link, the wired link to the PSTN or the internet link is inoperable. Path failure messages are a type of status message and indicate either a radio link failure or a wired link failure. Wired links include cabled links such as fibre optic cable links. Each alarm device has a number of communication links. In the present embodiment, the alarm device has a GPRS radio link, a GSM radio link and a wired link to the polling server (via a PSTN and an alarm gateway), as shown in Figure 6. In other embodiments, the alarm device may have only a subset of these communications links.

At step 1305 the polling server enters the path failure into a log record which is maintained locally to the polling server. A copy of the log is subsequently sent to the back office server.

At step 1310 the polling server selectively (for certain security grade settings as defined in Tables 1 to 3) adjusts a polling time interval limit against which it measures the frequency with which the alarm device sends "polling messages" to an alternative (shorter) time period corresponding to a "priority polling" ^{™} mode. This is similar to the arrangement described previously for the alarm device, with reference to Figure 4, (see also Tables 1 to 3). By reducing the polling time interval limit the effect of a "path failure" (i.e. the loss of one of the connections between the alarm device and the polling server) is mitigated to some degree.

At step 1340, the polling server awaits an indication that the previously failed connection path has been restored. This is indicated by a path restore message which indicates explicitly that the previously failed communication path has been restored, or by reception of any message over the previously failed path which implicitly indicates that the path is again operable. A log entry of the path restore event is kept at step 1345. When all paths are known to be operable again, at step 1350, the polling time interval limit, if previously adjusted to the priority polling ^{™} value, is reset to the default value. In some embodiments, the log keeping is minimised or omitted.

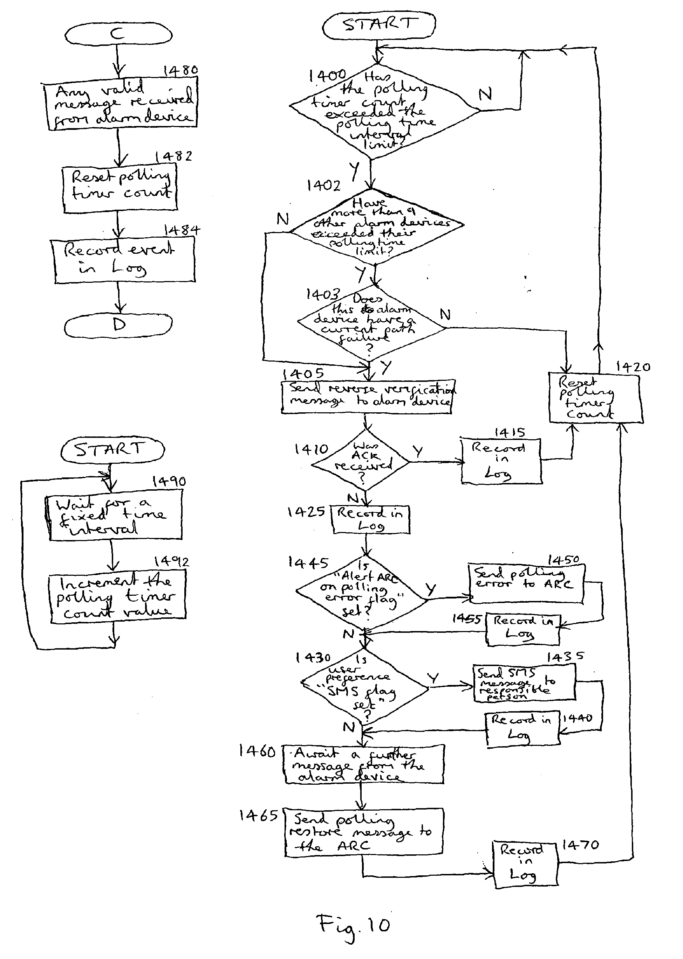

Figure 10 shows a polling monitoring routine in which the polling server performs various actions associated with checking that a polling message has been received within a preceding predetermined time period (and thus the alarm device is known to be operating correctly and to be connected to the polling server). Figure 10 shows the sequence of steps executed by the polling server (130) in order to check that the time interval between received polling messages received by the polling server (130) from the alarm device (10) does not exceed a maximum allowable time interval, and if the maximum allowable interval is exceeded to take appropriate action.

The appropriate action mentioned above includes performing an additional check of whether or not the alarm device (10) is operational and connected to the polling server (130) by sending a message to the alarm device (10) via the GSM gateway (150) and a GSM radio link, awaiting a response to that message, and if no response or an incorrect response is received, selectively sending a polling error message to the ARC (110).

The polling server (130) can also selectively send a SMS text message to a responsible user via the SMS gateway (676) and a GSM radio link, should a polling error occur. It can be cheaper and more convenient to send polling failure messages to a responsible user, rather than directly to an ARC, since the responsible user may be able at low cost and/or low inconvenience to determine if the polling failure alarm is a false alarm or not. Alternatively, polling error messages can selectively (depending on user preferences) be sent to an ARC (110). The ARC can then notify a responsible user and/or, for example, the police service.

The sequence of operations will now be described in greater detail.

At step 1490, the polling server waits for a fixed time period, in this embodiment the fixed time period is 1 second, but in other embodiments it could be another fixed time period. Then, at step 1492 the polling server increments a count value which it maintains in a "polling timer" counter.

Step 1480, when a polling message is received from the alarm device, the "polling timer" counter is reset to zero at step 1482. A log entry is kept in a storage means of the polling server (which is, in this embodiment, a disc drive, but in other embodiments may be flash memory, RAM or other storage means) at step 1484 recording that a polling message has been received. The log entry contains information including the time when the polling message was received, the alarm device ID code contained in the polling message, and the connection (GPRS radio, wired PSTN, wired internet) over which the polling message was received. It will be appreciated that the steps shown are an example of one embodiment of the polling timer counter, and that in other embodiments other implementations are possible. This part of the routine then returns to the start of the routine shown in Figure 7.

At step 1400, the polling server checks whether the polling timer counter has exceeded a predetermined polling time interval limit, as also previously described with reference to Figures 4 and 13. If the time limit has yet to expire then the polling server continues to wait. If, on the other hand, the polling time interval limit has been exceeded then the polling server checks at step 1402 if more than 9 other alarm devices have exceeded their polling time interval limit. This would indicate a severe network disruption. If this is the case then an additional check at step 1403 causes the polling server to ignore the fact that the present alarm device has exceeded its polling time interval limit unless the present alarm device has a current path failure condition (i.e. it has sent a path failure message to the polling server before the polling time interval was exceeded). This avoids large numbers of polling error messages being sent to the ARC if a major communications connection shared by many alarm devices is broken. The next step is step 1405. At step 1405 the polling server sends a "reverse verification notice", in this embodiment referred to as a "reverse notification message" over the GSM radio link to the alarm device, to enquire of the alarm device if it is operational and to ascertain whether or not it is connected to the polling server over at least one operational wired or radio link connection.

At step 1410 the polling server checks whether or not the alarm device has responded with an acknowledgement signal or message over the GSM radio link indicating that it is indeed operational and connected to the polling server. If no acknowledgement signal or message is received from the alarm device at step 1410 then the polling server sends a "polling error" message to the ARC indicating that the alarm device has lost contact with the polling server and that urgent attention at the site being monitored by the alarm device is required (since this could indicate that the alarm device has been sabotaged by an intruder). A log is also kept of the polling failure event at step 1425. The process then proceeds with step 1445.

Alternatively, if at step 1410 an acknowledgement is received from the alarm device, then no polling error message is sent to the ARC, since the alarm device is known to be operable and to have at least one connection to the polling server. Thus, it is possible to avoid sending polling error messages to the ARC in many situations, thereby reducing the amount of processing time wasted at the ARC and avoiding call-outs of police, fire crews etc. This may be particularly advantageous since in many cases police or fire crews will stipulate that they will only attend a particular site to be monitored a specified number of times (perhaps only 2 or 3 times) per year. Should this stipulated number of call-outs be exceeded, the police and/or fire crew will not attend, even in the case of a genuine intrusion or fire, with associated undesirable consequences. The method above can reduce this possibility. If an acknowledgement was received at step 1410 then the polling server makes a log entry at step 1415, then resets the polling timer counter at step 1420 and returns to the start of the main process of Figure 10.

If, at step 1445 a user preference "Alert ARC on poll error flag" is set, then a polling error message is sent to an ARC at step 1450 and a log entry recording that action is made at step 1455. The user preference can be stored in the database at the back office server, referenced using the alarm device ID code. The "Alert ARC on poll error flag" can be defaulted to true in some embodiments. The ARC to which the polling error message (and all other messages, including alarm messages) is sent is derived from the database at the back office server by referencing the database with the alarm device ID code to obtain a database entry for that alarm device ID code which describes the appropriate ARC address. The next step is step 1430.

At step 1430, a further user preference "SMS flag" is checked to determine whether or not a SMS message should be sent to a mobile telephone of a person (i.e. a responsible person associated with the site being monitored) over GPRS or GSM mobile telephone network, indicating that attention is required at the site. The database is accessible to the polling server which is in connection with the back office server (as previously described). If the SMS flag is set, at step 1430, then the aforementioned SMS message is sent to the responsible user and a log entry recording the sending of the SMS message is made at step 1440.

At step 1460 the polling server awaits reception of a message from the alarm device which would indicate to the polling server that the alarm device is operational and is connected to the polling server (such as, for example, a polling message, status message, or an alarm message). The polling server then sends a polling restore message to the ARC at step 1465 to indicate that the previously failed path has been restored. A log entry is made at step 1470 and then the polling timer counter is reset at step 1420 before the process returns to the start of the main process of Figure 10. In some embodiments, some or all of the log keeping steps may be omitted.

The provision of the step (1405) of the polling server sending the reverse verification message to the alarm device, and checking (1410) for receipt of an acknowledgement, results in a reduction of the number of false polling errors sent to the ARC (false polling errors are defined as those polling errors which are sent to the ARC when the alarm device still has at least one connection path available between it and the polling server), thus reducing workload on the ARC, reducing costs and increasing the reliability of the alarm network (100).

The provision of the ability for the polling server to send an SMS text message to a responsible person can further reduce the workload of the ARC and also allows the owner of the site being monitored to be more closely involved in protecting the site by alerting them more quickly and conveniently to problems with the communication connections between the alarm device (10) and the polling server (130).

In the "priority polling"^{™} mode described with reference to Figures 4 and 13, the predetermined polling time interval limit is reduced, compared to that limit used in the default mode. Thus the polling server expects to receive polling messages from the alarm device more frequently in the "priority polling" ^{™} mode, i.e. at a "priority rate" as defined in Tables 1 to 3, and accordingly will signal a polling error message, if configured to do so by user preferences, if polling messages are not received from the alarm device within this reduced "priority polling" ^{™} polling time interval limit. This action mitigates the loss of one of the connections (radio or wired) between the alarm device and the polling server when a path failure causes the alarm device and polling server to enter the priority polling ^{™} mode.

The provision of both GSM and GPRS radio links, and the ability of the polling server (130) to receive polling messages and alarm messages over the GSM radio link (in addition to the GPRS radio link and a wired link) allows the higher security grades (grades 3 and 4), described previously with reference to Tables 1 to 3, to be operated. This is because those higher grades require polling messages to be sent and received at least every hour and this rate of sending and receiving polling messages would not be possible if only the GPRS radio link were provided. This is because the GPRS radio link has been found to be frequently out of operation for longer than an hour. By providing the GSM radio link as a backup for transmitting alarm messages and for transmitting the "reverse verification" message to the alarm device (10) which is sent in the event of a polling message not being received in the expected time window, the polling server is able to verify correct operation of the alarm device. This is the case even in the event that the GPRS radio link becomes inoperative for a period longer than the polling interval of security grades 3 and 4 as defined in Tales 1 to 3.

By the polling server monitoring for alarm messages on the GSM radio link as well as the other communications links (GPRS, wired), the chances of an alarm message being lost are reduced.

Each polling server (130, 662) also incorporates software and hardware which allows the polling server (130) to transmit configuration data and/or software code to the alarm device (10). Configuration data is data which is used by the alarm device to control certain aspects of its behaviour, such as, for example, a user preference which is part of the configuration data and determines which ARC (110) the alarm device (10) attempts to contact over the PSTN telephone line (635) via the PSTN (170). Software code can contain instructions executable by the processor of the alarm device or interface device, causing the alarm device to perform its functions.

The polling server receives the configuration data and/or software code from the back office server and sends it to the alarm device. The configuration data and/or software code is sent to the alarm device over the GPRS radio link although it could be sent over the GSM radio link or one of the wired links. GPRS offers higher connection data transfer speeds and greater security than GSM.

The alarm device (10) receives the configuration data and/or software code from the polling server and uses the received information to update configuration constants and/or software which are internal to the alarm device.

A mechanism is thereby provided for updating the configuration data (containing, for example, user preferences) of an alarm device, without requiring a maintenance engineer to visit the site being monitored. Furthermore, a method of updating the software running on the processor of an alarm device is provided which does not require the alarm device to be physically replaced or visited by a maintenance engineer (it is sometimes necessary to upgrade the software running on an alarm device, also referred to as "firmware", if an error is discovered in the software, or to provide improved functionality). Thus, costs are reduced and convenience is increased. The reliability of the alarm device is also increased.

Every time that the alarm device sends a message to the polling server, whether the message is an alarm message, a polling message, a path failure message or some other type of message, in this embodiment the polling server stores information contained either explicitly or implicitly in the message. The polling server periodically sends at least a subset of the collected information to the back office server to which it is connected, in order that the back office server can store the information in its database. As mentioned previously, each alarm device is identified by an alarm device ID code which uniquely identifies the alarm device (10) in the alarm network (100). This allows the back office server to keep an up to date database entry per alarm device of certain statistics about each alarm device, including the last time the alarm device sent an alarm or polling message to the polling server, and the status of the radio and wired connections to and from the alarm device. Not all embodiments store all pieces of log information mentioned herein or forward all of the stored log information to the back office server.

It is envisaged that features of the embodiment described above with reference to Figures 1 to 5 may also, in further embodiments, be features of the embodiment described above with reference to Figures 6 to 11.

Features of further embodiments will now be described.

In further embodiments, there is provided a communications device for use in an alarm as part of an alarm network, wherein, the device is arranged to establish a first radio link, a second radio link and a wired link with a part of the network remote from the alarm so as to communicate therewith, and wherein the device is further arranged to attempt to communicate with the remote part of the network in a first operation via the first radio link and then in a second operation via the second radio link.

In further embodiments, there is provided a method of operating a communications device for use in an alarm, the device being arranged to establish a first radio link, a second radio link and a wired link with a part of the network remote from the alarm so as to communicate therewith, the method comprising the steps of the device: a) in a first operation, attempting to communicate with the remote part of the network via the first radio link; and then b) in a second operation, attempting to communicate with the remote part via the second radio link.

The method may include the additional step of, in an additional operation, attempting to communication with the remote part via the wired link. The additional operation may be carried out before, after or between the first and second operation. In some embodiments, it is carried out as a third operation subsequent to the second operation.

In the first operation, the device may make a plurality of attempts to communicate with the remote part. In the second operation, the device may make a plurality of attempts to communicate with the remote part. In the additional operation, the device may make a plurality of attempts to communicate with the remote part. Each attempt in the first operation and/or each attempt in the second operation and/or each attempt in the additional operation may comprise the transmission by the device of information.

The communication with the remote part of the network may comprise the transfer of information indicative of the status of the device. The status may comprise whether or not the device is operational. Whether or not the device is operational may comprise whether or not the first radio link is operational, whether or not the second radio link is operational, and/or whether or not the wired link is operational. Whether or not the device is operational may comprise none of the foregoing; and may comprise an indication that the device is powered. The status may comprise whether or not an alarm condition has been met. The status may comprise whether or not the device is connected to one, more or all of the first radio link, the second radio link and the wired link, and may comprise whether or not the or each link is operable.

The information indicative of the status of the device may comprise a polling signal indicative of the device being operational. The information indicative of the status of the device may comprise an alert signal indicative of the status being such that human intervention is desirable. The alert signal may be an alarm signal indicative of the alarm condition being met. The alert signal may be a link failure signal indicative of one or more of the first radio link, the second radio link and the wired link not being operational.

The communication with the remote part of the network may comprise the device transmitting thereto the polling signal, which may take place in a standby mode of operation of the device. The communication with the remote part of the network may comprise the device transmitting thereto the alarm signal, which may take place in an alarm mode of operation of the device. The communication with the remote part of the device may comprise the device transmitting a link failure signal indicative of one or more of the first radio link, the second radio link and the wired link not being operational; which may take place in a link failure mode of operation of the device.

The method may include the step of the device entering one or more of the modes of operation. The method may include the step of performing, in the standby mode of operation, the first operation so as to transmit periodically the polling signal via the first radio link, and, upon the device receiving an error signal, performing the second operation so as to transmit a confirmatory signal confirming receipt by the device of the error signal. The device may then continue to perform the first operation.

The error signal may be received by the device over the second radio link. The error signal may be indicative of at least one polling signal not having been received by the or another remote part of the network over the first radio link. The period may be between one minute and one hour. The period may be less than 30 minutes. The period may be approximately 10 minutes.

The method may include the step of the device entering the alarm mode of operation upon the alarm condition being met. The alarm condition may be met when the device receives an input indicative of this. The method may include the step of the device receiving an input indicative of the alarm condition being met. The method may include the step of the device detecting whether or not the first radio link and/or whether or not the second radio link is/are operable; and/or may include the step of detecting whether or not the wired link is operable. The method may include the step of the device entering the link failure mode of operation upon detecting that one, two or more of these links is not operable.

Upon entering the alarm mode and/or upon entering the failure link mode, the method may include the step of the device performing the first operation so as to make a predetermined number of attempts to transmit the alert signal via the first radio link; and then performing the second operation so as to make a predetermined number of operations to transmit the alert signal via the second radio link; and the method may further include the step of performing the third operation so as to make a predetermined number of attempts to transmit the alert signal via the wired link.

Fewer than 10 attempts may be made in each operation. No more than five attempts may be made in each operation. Three attempts may be made in the first operation. Two attempts may be made in the second operation. Five attempts may be made in the third operation.

The first and/or second radio link may make use of a mobile telephone radio frequency and/or mobile telephone communications protocol. One of the first and second radio link may be a GPRS link. The other of the first and second radio link may be a GSM data link in which GPRS is not used. In an embodiment, the first radio link is a GPRS link and the second radio link is the GSM data link. The wired link may be a fixed telephone line, sometimes referred to as a "landline". The wired link may be a PSTN line. The wired link may be a DSL link; it may be an ADSL link, such as a broadband link.

The method may include the device detecting whether or not one, more or all of the first radio link, the second radio link and the wired link are operational. The method may include the device, upon checking that one, more or all of the first radio link, the second radio link and the wired link is or are not operational, attempting to communicate with the remote part via the, each, or one of, the remaining links. The method may include attempting to transmit the polling signal in this way.

The device may include logging memory means arranged to retain a record of one, more or all attempts at outgoing communication made by the device. The record may include information indicative of one, more or all of: whether or not the or each attempt was successful; the number or attempts made; the link over which the or each attempt was made; the time and/or date of the or each attempt; whether the attempt was to transmit a polling signal or an alert signal. The device may be further arranged to transmit information indicative of the record to the or another remote part of the network.

The device may be arranged to receive modifying information over one or more of the first radio link, the second radio link and the wired link so as to modify the operation of the device. The device may be arranged to receive modifying information and in response thereto to change the grade of the alarm of which the device is part. The grade may be determined in accordance with standard EN 50131. In response to receiving the modifying information, the device may be arranged to change the frequency with which it attempts to transmit the polling signal over one more or all of the first radio link, the second radio link and the wired link.

In further embodiments, there is provided a communications device for use in an alarm as part of an alarm network, the device including the memory logging means defined hereinabove.

In further embodiments, there is provided a method of operating a communications device for use in an alarm as part of an alarm network, the method including the device retaining in the logging memory means defined hereinabove the record.

In further embodiments, there is provided a communications device for use in an alarm as part of an alarm network, the device arranged to receive the modifying information defined hereinabove over one or more of the first radio link, the second radio link and the wired link so as to modify the operation of the device. The device may be arranged to receive modifying information and in response thereto to change the grade of the alarm of which the device is part. The grade may be determined in accordance with standard EN 50131. In response to receiving the modifying information, the device may be arranged to change the frequency with which it attempts to transmit the polling signal over one more or all of the first radio link, the second radio link and the wired link.

In further embodiments, there is provided a method of operating a communications device for use in an alarm as part of an alarm network, the method including the device receiving the modifying information defined hereinabove over one or more of the first radio link, the second radio link and the wired link and modifying the operation of the device.

In other embodiments there is provided a method of operating an alarm gateway, the method including the steps of: a) the alarm gateway receiving information over a PSTN from an interface device which is in communication with an alarm device, the information including at least one of: periodic polling messages indicative of the interface device being operable, and an alarm message from the alarm device; and b) the alarm gateway sending to a user of the interface device a message indicative that the information has been received at the alarm gateway.

Step (b) may include the alarm gateway sending the message by SMS messaging over a mobile telephone network, such as GPRS and/or GSM.

In other embodiments there is provided a polling server arranged to communicate with an interface device via a PSTN, and which is arranged to monitor for periodic reception of a polling message from the interface device, and if a polling message is not received for a predetermined duration of time the polling server may send a polling failure message to an ARC or to a user, via cable, radio, PSTN, optical or other suitable means, and preferably in which polling failure messages can be sent to a user via a GSM or GPRS radio network SMS message.

Features of the embodiments described and shown in the Figures can be combined in any combination, as would be understood by the skilled reader as being practicable

The scope of the invention is not intended to be limited to any particular described embodiment but instead is defined by the attached claims.

## Claims

1. A method of operating alarm processing means that forms part of an alarm network, the network comprising a first radio link, a second radio link and a wired link between the alarm processing means and an alarm device remote from the alarm processing means so as to allow communication therebetween, the method further the comprising the steps of the alarm processing means:
a) monitoring for reception of a signal from the alarm device on at least one of the first radio link and the second radio link;
b) if no signal from the alarm device is received on the first radio link during a predetermined time period, transmitting a query signal on the second radio link to the alarm device requesting that the alarm device respond thereto;
c) monitoring for reception of a response from the alarm device to the query signal; and
d) if no signal from the alarm device and no response to the query signal is received within another predetermined time period, sending an error signal to a remote part of the network.

2. A method according to claim 1, where in the first radio link is a GPRS radio link and the second radio link is a GSM radio link.

3. A method according to any preceding claim, wherein the signal monitored for reception from the alarm device is a polling signal indicative that the alarm device is operating correctly and/or an alarm signal indicative of an alarm condition having been met and/or a link fail signal indicative that one of the wired link and the radio links is inoperable.

4. A method according to any preceding claim, wherein step (a) includes monitoring for reception of the signal on each of the first radio link, the second radio link and the wired link.

5. A method according to any preceding claim, and including the step of, upon reception of an alarm signal, a further signal being sent by the alarm processing means to a remote part of the network, which may be an alarm receiving centre, the further signal indicating that an alarm condition has been met.

6. A method according to any preceding claim, wherein step (d) includes or is followed by the step of the alarm processing means signalling via SMS messaging, over a mobile telephone network such as GPRS and/or GSM, to a user that an error has occurred.

7. A method according to any preceding claims, wherein the step of monitoring for reception of a signal from the alarm device is followed by the step of the alarm processing means validating the signal and not acting on the signal in the event of the signal being determined to be invalid, and optionally including comparing an identifier code contained within the signal received from the alarm device with information contained in a database accessible by the alarm processing means.

8. A method according to any preceding claim and including the alarm processing means periodically sending information about the alarm device to a remote server accessible by an operator of the alarm network, such that the remote server can store and process the information.

9. A method according to any preceding claim, wherein the information about the alarm device includes records of failed communication attempts between the alarm device and the alarm processing means.

10. A method according to any preceding claim and including the steps of establishing a radio link between the alarm processing means and an alarm device which is remote from the alarm processing means, so as to allow data communication therebetween, and the alarm processing means selectively transferring to the alarm device information for controlling operation of the alarm device.

11. A method according to any preceding claim and further including the steps of the alarm processing means:
i) monitoring for reception of a signal from the alarm device, the signal containing information identifying the alarm device;
ii) based on the identifying information, determining if the device is permitted to use the alarm network; and
iv) if the device is not permitted to use the alarm network then not sending a signal to the a device in response to the signal received therefrom.

12. A network as defined in any preceding claim and optionally including plural ones of the alarm processing means, wherein each of the plurality of polling server has a respective wired connection to the remainder of the network at respective, spaced apart, geographical locations.

13. A network as defined in any preceding claim and further including network relay means for relaying information between the alarm processing means and the alarm device via the wired link, which may be a PSTN, the network relay means optionally arranged for data communication with the alarm unit via the PSTN using a modem or internet protocol.

14. Alarm processing means programmed and operable to carry out a method according to any one of claim 1 to claim 11.

15. A record carrier having thereon or therein a record of instructions executable by processing means to cause those means to carry out a method according to any one of claim 1 to claim 11; or a computer program containing code portions which executable by processing means to cause those means to carry out a method according to any one of claim 1 to claim 11.
